# EUROPEAN PATENT SPECIFICATION

(11) **EP 2 343 908 B1**
(45) Date of publication and mention of the grant of the patent: **06.03.2013**
(21) Application number: 10015902.9
(22) Date of filing: 21.12.2010
(51) Int. Cl.: H04Q 1/457, H04L 12/26

(54) **Measuring one way delay using telephony in-band tones**
Messung der Einwegverzögerung mittels Telefonietönen innerhalb des Bandes
Mesure de retard unidirectionnel utilisant des tonalités intra-bandes de téléphonie

(30) Priority: 08.01.2010 US 684635
(43) Date of publication of application: 13.07.2011
(73) Proprietor: Ixia, Calabasas, California 91302 (US)
(72) Inventor: Ungureanu, Marius, 023573 Bucharest (RO)
(74) Representative: Samson & Partner

(56) References cited:
- WO-A2-2004/109317
- US-A1- 2007 298 823

## Description

### BACKGROUND

Field

This disclosure relates to testing a communications network and specifically the delay between devices on a network.

Description of the Related Art

In today's telecommunications network, users communicate with one another over a wide range of networks ranging from various circuit-switched networks, such as the public switched telephone network (PSTN), to packet-switched networks, such as IP networks or other packet-switched networks. As voice communication is transferred over these hybrid networks, or networks combining circuit-switched and packet-switched networks, the potential for delay (i.e. the time from when the first device transmits data to the time the second device receives the data) between the devices increases. This is because as the data travels through these hybrid networks, additional nodes on the networks are needed to handle the data. As a result, the transmission of data through these additional nodes creates the potential for delay. Accordingly, it is increasingly important to measure the delay of data between users on different networks so as to improve the quality of the network. Measuring the delay of voice communication is widely used for assessing and improving the Quality of Service in hybrid networks.

Traditionally, many networks utilized external stimulators to measure the delay in a network. The external stimulator would likely be connected to both devices on the network and would monitor the data as it was transmitted between the network devices. However, this method usually required additional system resources since the delay measurements were performed only after the external stimulator received the time information from both devices. Alternatively, some networks would calculate the one way delay between two devices on a network by measuring the round trip delay and then dividing the round trip delay by two. However, especially in packet-switched networks in which packets are routed in a dissimilar way, this method would not provide an accurate measurement of the delay between the two devices.

US 2007/298823 A1 describes a mechanism of estimating media latencies for push-to-talk communications by using, e.g., GPS timestamps. A device determines a first time associated with transmitting a first packet, such as a UDP packet, to a server. The device receives a second packet that corresponds to the first packet and includes an indication of the first time, a second time associated with receipt of the first packet by the server and a third time associated with transmission of the second packet to the device. That device determines a fourth time associated with receipt of the second packet. The device then uses a relationship between the first time, second time, third time and fourth time for determining at least an estimate of media latency associated with the push-to-talk communication corresponding to the first and second packets.

WO 2004/109317 A2 discloses an asset location tracking system including a DTMF (dual tone multiple frequency) modulator to encode location coordinates, timestamps and identification information as DTMF tones.

### SUMMARY OF THE INVENTION

According to the present invention a method is provided for measuring one-way delay between a source device and a destination device on a network as defined by claim 1.

According to another aspect, a system is provided for measuring one-way delay between a source device and a destination device on a network, as defined by claim 8.

Further advantageous aspects are provided in accordance with the dependent claims.

### DESCRIPTION OF THE DRAWINGS

FIG. 1 is a block diagram of a first environment in which measuring delay may be implemented.

FIG. 2 is a block diagram of a second environment in which measuring delay may be implemented.

FIG. 3 is a block diagram of a network device.

FIG. 4 is a block diagram of a path confirmation system.

FIG. 5 is a block diagram of a system for measuring the delay.

FIG. 6 is a flow diagram of a process for measuring the delay between two network devices.

Throughout this description, elements appearing in figures are assigned three-digit reference designators, where the most significant digit is the figure number and the two least significant digits are specific to the element. An element that is not described in conjunction with a-figure may be presumed to have the same characteristics and function as a previously-described element having a reference designator with the same least significant digits.

### DETAILED DESCRIPTION

Description of Apparatus

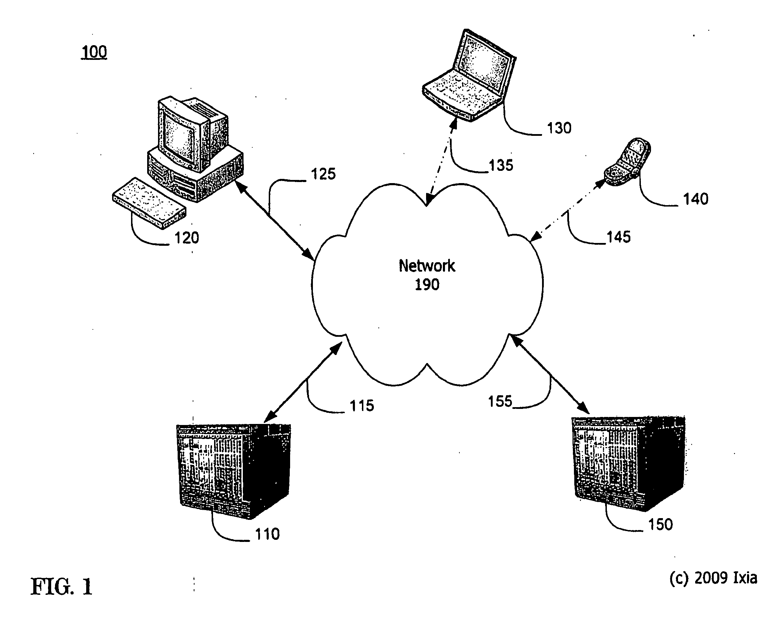

FIG. 1 shows a block diagram of a first environment 100 in which measuring delay may be implemented. The environment 100 may include a network 190 and multiple network devices, 110, 120, 130, 140 and 150 connected to the network 190 by respective links 115-155.

The network devices, 110-150, may be analog telephones, digital devices such as SIP phones, or computing devices such as computer workstations, personal computers, servers, portable computers, video game systems, personal video recorders, telephones, personal digital assistants (PDAs), computing tablets, and the like. The network devices, 110-150, may also be network testing equipment such as analyzing devices, network conformance systems, emulation systems, network monitoring devices, and network traffic generators; components such as processors, network cards and network communications units. One or more of the network devices 110-150, may be devices to be tested and may be referred to as devices under test.

The network devices may include, for example and without limitation, network test equipment 110 and 150, personal computers 120, portable computers 130, and cellular phones 140. Links 135 and 145 to portable computer 130 and cellular phone 140 may typically be wireless links. Links 115, 125 and 155 may commonly be wired or fiber optic links but may also be wholly or partially wireless links.

The network 190 may be a local area network, a wide area network, a circuit-switched network such as the Public Switched Telephone Network (PSTN), a packet-switched network such as an IP network, a wireless network, or a combination of these networks and other networks. The network 190 may be or include the Internet. Voice is generally communicated over a circuit-switched network as analog signals. Voice is generally transmitted between devices on a band having a frequency range of between 300 Hz ― 3.4 kHz, known as the voice band. Call control information and call signaling information, such as the telephone number being dialed, whether a dial tone exists, whether the call has been terminated, etc, may also be transmitted over the same voice band. Call control information and call signaling information may be transmitted as a series of tones over the voice band. These tones include single frequency tones (SF), multi-frequency tones (MF), dual tone multi-frequency tones (DTMF), or other custom defined tones. DTMF is a tone consisting of two frequencies superimposed.

Some telephony tones have been pre-defined for signaling purposes, such as dialing, inter-exchange communication, testing, etc. The parameters for these tones such as frequency and time are defined by regulations, such as ITU-T E.180. When these call signaling related tones are transmitted on the voice band it is known as in-band signaling because the call signaling information is transmitted on the same physical channel as the voice.

A common use of DTMF tones is touch tone dialing. On a touch tone telephone, each digit is represented by a pair of tones, usually a low frequency tone and a high frequency tone. For example, the number 1 is represented by the low frequency 697 Hz and the high frequency of 1209 Hz. Similarly, each remaining digit 2-9 also is represented by a pair of tones which is used by the network to determine what telephone number is being called.

Voice may also be communicated over packet-switched networks in the form of packets conforming to one or more communications protocols. For example, voice is commonly communicated over the Internet using a combination of the Real-Time Transport Protocol (RTP), User Datagram Protocol (UDP), Session Initiated Protocol (SIP), H.323, and Internet Protocol (IP). These and other protocols may be used to communicate voice over packet-switched networks.

The network test equipment 110 and 150 may be a network testing device, performance analyzer, conformance validation system, network analyzer, or network management system. The network test equipment 110 and 150 may have a plurality of links to the network 190, each of which may be used to transmit voice, receive voice data, or both transmit and receive voice.

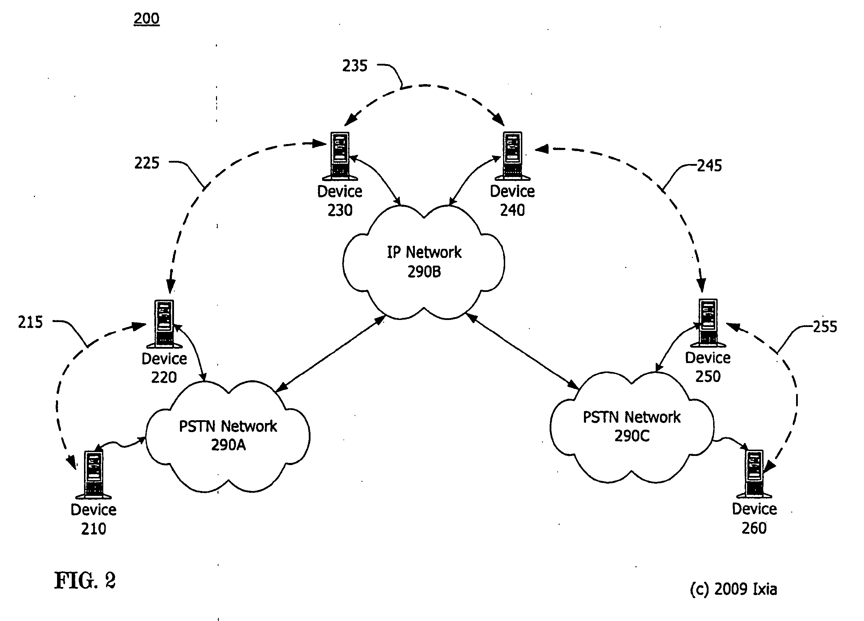

Referring now to FIG. 2, a block diagram of a second environment 200 in which measuring delay may be implemented is shown. The environment 200 may include network devices 210, 220, 230, 240, 250 and 260. The environment 200 may also include multiple networks including PSTN networks 290A and 290C and IP network 290B.

In the environment shown in 200, the delay can be measured between devices on the same network or the delay can be measured between devices on hybrid networks. For example, the delay 215 and 255 can be measured between devices 210 and 220 or devices 250 and 260, all of which communicate through the PSTN networks 290A and 290C. In addition, the delay 235 can be measured between device 230 and device 240 which communicate through the IP network 290B. Alternatively, the delay 225 can be measured between device 220 and device 230 over PSTN network 290A and IP network 290B. Similarly, the delay 245 can be measured between device 240 and device 250 over IP network 290B and PSTN network 290C. The delays 215, 225, 235, 245 and 255 can be measured by sending and receiving in-band tone sequences between the devices. Gateways (not shown) may exist between the PSTN and IP networks. The gateways may exist to convert the audio signals carried on the circuit-switched network into data packets carried over the packet-switched network and vice versa. The maximum delay measured can exceed the maximum one-way delay of 1500 ms as defined in the ITU standards.

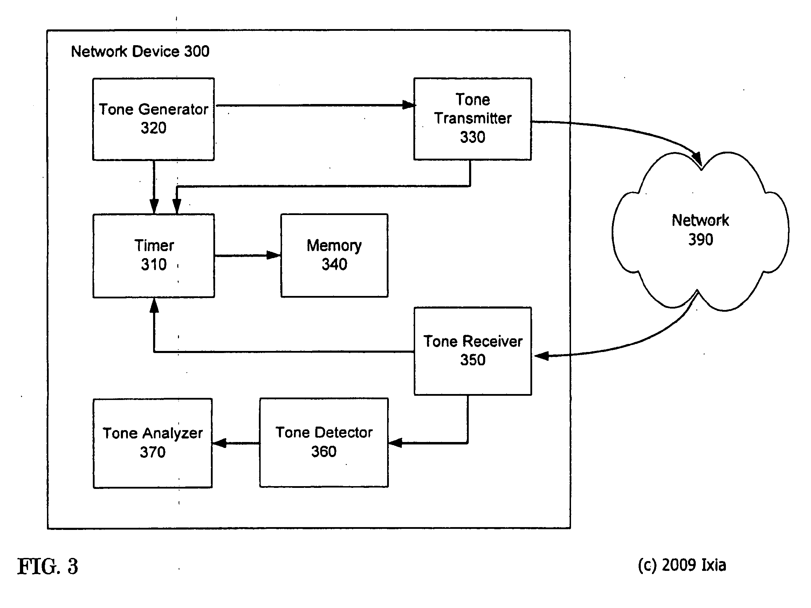

Referring now to FIG. 3, a block diagram of a network device 300 is shown. The network device 300 may include a timer 310, a tone generator 320, a tone transmitter 330, a memory 340, a tone receiver 350, a tone detector 360, and a tone analyzer 370. The network device 300 may be capable of transmitting voice and signaling tones and/or receiving voice and signaling tones from the network 390. The network device 300 may be any of the devices 110-150 depicted in FIG. 1, or any of the devices 210-260 depicted in FIG. 2 or some other device. The network device 300 may include other elements and features not shown in FIG. 3, such as a microphone, a speaker, a keyboard, and other elements.

The network device 300 may include hardware and software for providing functionality and features described herein. The network device 300 may therefore include analog circuits, digital circuits, software, firmware, and processors such as microprocessors, digital signal processor, field programmable gate arrays (FPGAs), application specific integrated circuits (ASICs), programmable logic devices (PLDs) and programmable logic arrays (PLAs). The depiction of the network device 300 as functional elements in FIG. 3 does not imply a corresponding physical separation or demarcation. All or portions of the timer 310, the tone generator 320, the tone transmitter 330, the memory 340, the tone receiver 350, the tone detector 360 and the tone analyzer 370 may be implemented using a common integrated circuit chip and/or by software running on a common processor. The hardware and software and their functions may be distributed such that some functional elements may be implemented by one or more processors and other elements by other devices.

The network device 300 may include a timer 310. The timer 310 may operate to provide the network device 300 with the system time. The timer 310 may be synchronized with an external time server that provides a universally recognized time upon receipt of a request for the current time. For example, the timer 310 may be synchronized with a remote time server such as an NTP server which is configured according to the methods described in the NTP specification. The timer 310 may communicate directly with a remote NTP server or alternatively the timer 310 may communicate with a local NTP client to synchronize the system time. The timer 310 may also be synchronized with another network device on the network 390. For example, network device 300 and another network device on the network 390 may receive instructions to synchronize its system clocks with each other such that no clock offset or drift exists. The network device 300 may be instructed to synchronize its clock with another device through software controlling the network device. The timer 310 may include a local clock chip or circuit and/or local clock software to keep an accurate time based on a time received from a remote time server.

The tone generator 320 may generate one or more in-band tones, including DTMFs, MFs, SFs, or other custom defined in-band tones for measuring the delay on the network. These in-band tones may be configurable by an operator using the network device. The in-band tones generated for measuring the delay between devices on the network may be configured to be tones that do not interfere with the international regulatory signaling tones, country defined regulations and actual voice data. The in-band tones generated also may be configurable based on the underlying hardware platform capabilities. For example, if the network device is capable of utilizing four simultaneously active tone detectors to decode the in-band tones, then the in-band tones generated can be configured to use these four active tone detectors. The tone transmitter 330 may transmit the tones to a destination device via the network 390. The network device 300 may include at least one memory 340 to store in-band tones and the system time for transmitting and detecting tones. The memory 340 may be for example, random access memory (RAM).

The network device 300 may also include a tone receiver 350 to receive in-band tones from the network 390. The received in-band tones are then decoded by the tone detector 360. The network device 300 may comprise one or more tone detectors 360. The decoded tones may then be used both for confirming the network path between the network device 300 and a destination device and also for measuring the delay between the network device 300 and the destination device.

The tone analyzer 370 may be adapted to analyze the decoded tones to confirm whether a network path exists between the network device 300 and a destination device on the network 390. The tone analyzer 370 may be able to confirm the network path automatically after receiving the in-band tones from a destination device if the in-band tones meet at least one or more criteria. The tone analyzer 370 also may be configured to automatically calculate the delay between the network device 300 and a destination device by utilizing the resulting digits from the decoded tones. In this context "automatically" means without operator involvement.

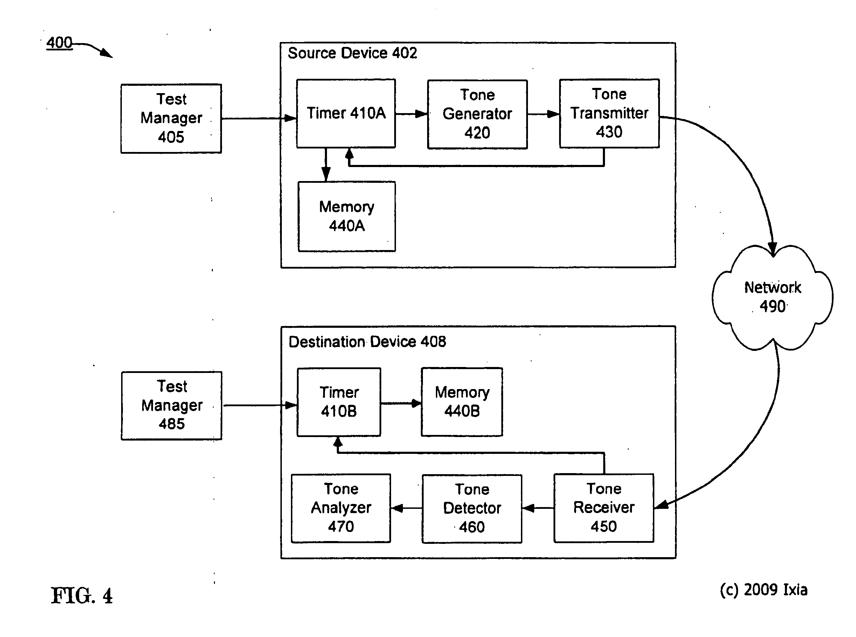

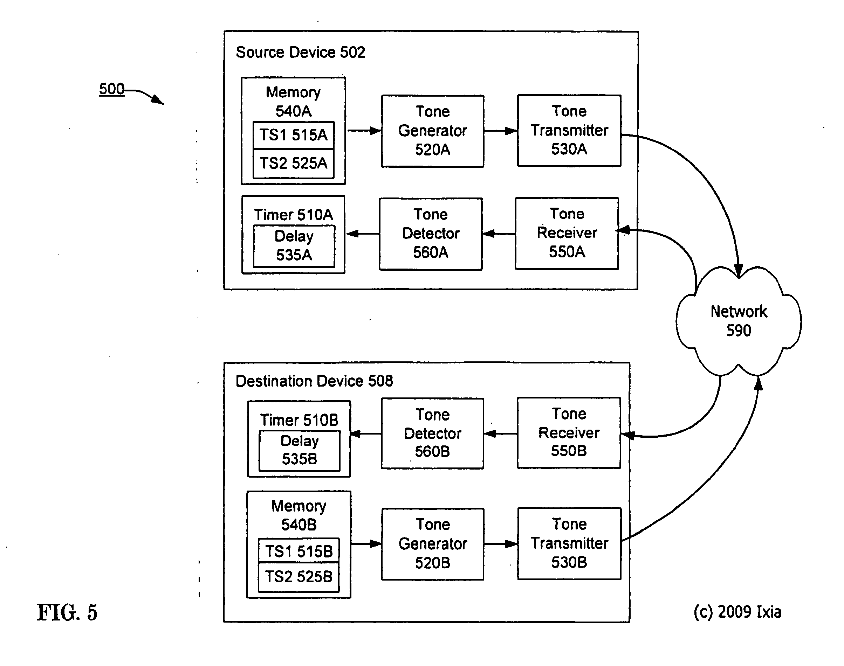

Referring now to FIGS. 4 and 5, block diagrams of a system for measuring the delay between a source device and a destination device are shown. Measuring the delay between a source device and a destination device occurs in two phases. In the first phase, or path confirmation phase, the network path between the source device and the destination device is established. The network path is established by transmitting in-band tones between the source device and the destination device and each device confirming the in-band tones as the in-band tones expected. During the first phase, each device generates and stores a timestamp of the time when a tone was first transmitted or when a tone was first detected by the device. In the second phase, the source device transmits the timestamps it stored in the first phase to the destination device. The destination device may then use a timestamp that it stored in the first phase along with the timestamp it received from the source device to calculate the delay between it and the source device. Similarly, the destination device may also transmit the timestamps it stored in the first phase to the source device. The source device may then use a timestamp that it stored in the first phase along with the timestamp it received from the destination device to calculate the delay between it and the destination device.

Referring now to FIG. 4, a block diagram of a system during the first phase, or the path confirmation phase, of measuring the delay between a source device 402 and a destination device 408 on a network 490 is shown. The system may also include test managers 405 and 485.

The source device 402 and the destination device 408 may each be a network device such as the network device 300. The source device 402 may include a timer 410A, a tone generator 420, a tone transmitter 430, and a memory 440A. The destination device 408 may include a timer 410B, a memory 440B, a tone receiver 450, a tone detector 460, and a tone analyzer 470.

Test managers 405 and 485 may instruct the source device 402 to initiate measuring the delay between the source device 402 and the destination device 408. The test manager 405 may include an operator interface (not shown) to receive an instruction to perform the delay measurement from an operator and to convey the delay measurement to the operator. Alternatively, the test manager may run a script which instructs the source device to initiate measuring the delay between the source device 402 and the destination device 408.

The test managers 405 and 485 may be devices that are physically separate and under separate control from the respective source device 402 and destination device 408. The test managers 405 and 485 may be operated by a system administrator to measure the delay in the network. When physically separate, the test managers 405 and 485 may communicate with the respective source device 402 and destination device 408 via the network 490 or via some other connection. The test managers 405 and 485 may be a portion of the respective source device 402 and destination device 408, in which case the delay measurement may be initiated by an operator of the source device 402 or destination device 408.

To establish a network path between the source device 402 and the destination device 408, the source device 402 may generate and transmit a set of in-band tones including one or more in-band tones to the destination device 408. The in-band tones generated and transmitted may include SFs, MFs, DTMFs or custom defined tones. For example, the source device may transmit three custom defined tones, with the first tone having a frequency of 500 Hz, the second tone having a frequency of 1 kHz, and the third tone having a frequency of 1.5 kHz. The test manager 405 may instruct the source device 402 as to the in-band tones that should be generated. Alternatively, the test manager 405 may provide parameters to the source device 402 of what frequencies the generated in-band tones should be in. The test manager 405 may select the in-band tones so as to ensure that the tones do not interfere with any regulatory signaling tones already defined. When the first in-band tone is transmitted to the destination device 408, the source device 402 may signal the timer 410A to generate a timestamp of when the first tone was transmitted. This timestamp, known as the source device generation timestamp, may then be stored in the memory 440A.

The destination device 408 may then receive, decode and analyze the in-band tones to confirm the in-band tones to be the in-band tones expected by the destination device 408. The test manager 485 may instruct the destination device 408 as to which in-band tones are to be expected from the source device 402. When the destination device 408 receives the first in-band tone, it may signal the timer 410B to generate a timestamp of when the first in-band tone was detected. This timestamp, known as the destination device detection timestamp, may then be stored in the memory 440B.

The destination device 408 then may generate and transmit a set of in-band tones including one or more in-band tones to the source device 402 (not shown). The in-band tones generated and transmitted may include SFs, MFs, DTMFs or custom defined tones. The in-band tones generated may be the same tones as the tones that the source device 402 sent to the destination device 408. Alternatively, the in-band tones may be different tones from the in-band tones the destination device 408 received. The test manager 485 may instruct the destination device 408 as to the in-band tones that should be generated. Alternatively, the test manager 485 may provide parameters to the destination device 408 of what frequencies the generated in-band tones should be in. The test manager 485 may select the in-band tones so as to ensure that the in-band tones do not interfere with any regulatory signaling tones already defined. When the first in-band tone is transmitted to the source device 402, the destination device 408 may signal the timer 410B to retrieve the timestamp of when the first in-band tone was transmitted. This timestamp, known as the destination device generation timestamp, may then be stored in the memory 440B. The source device 402 may then receive, decode and analyze the in-band tones to confirm the in-band tones to be the in-band tones expected by the source device 402. The test manager 405 may instruct the source device 402 as to which in-band tones are to be expected from the destination device 408. When the source device 402 receives the first in-band tone, it may signal the timer 410A to retrieve the timestamp of when the first in-band tone was detected. This timestamp, known as the source device detection timestamp, may then be stored in the memory 440A. Once both the source device 402 and the destination device 408 have confirmed the in-band tones each received as the in-band tones expected, the path confirmation phase, or first phase, is completed.

Referring now to FIG. 5, a block diagram of a system during the second phase of measuring the delay between a source device 502 and a destination device 508 is shown. The source device 502 may first retrieve the two timestamps that it stored in its memory 540A during the path confirmation phase, specifically the source device generation timestamp 515A and the source device detection timestamp 525A. The tone generator 520A may then encode these two timestamps, 515A and 525A, as in-band tones. The timestamps may be encoded as in-band SF tones, MF tones, DTMF tones, or other custom defined tones. The timestamps may be encoded based on the hardware capabilities of the destination device 508. For example, if the destination device 508 has resources for at least four active tone detectors, then the timestamps may be encoded as tones that are capable of being decoded by the four tone detectors. The test manager may inform the source device 508 as to how many active tone detectors the destination device 508 has. The tone transmitter 530A then transmits the encoded timestamps to the destination device 508.

The tone receiver 550B of the destination device 508 receives the encoded timestamps from the source device 502 over the network 590. The tone detector 560B of the destination device 508 decodes the encoded timestamps to retrieve the source device generation timestamp and the source device detection timestamp. Then using the stored timestamps in the destination device 508 along with the timestamps received from the source device 502, the timer 510B of the destination device 508 can calculate the delay 535B between it and the source device 502.

Similarly, the destination device 508 may first retrieve the two timestamps 580 that it stored in its memory 540B during the path confirmation phase, specifically the destination device detection timestamp 515B and the destination device generation timestamp 525B. The tone generator 520B may then encode these two timestamps, 515B and 525B, as in-band tones. The timestamps may be encoded as in-band SF tones, MF tones, DTMF tones, or other custom defined tones. The timestamps may be encoded based on the hardware capabilities of the source device 502. For example, if the source device 502 has resources for at least four active tone detectors, then the timestamps may be encoded as in-band tones that are capable of being decoded by the four tone detectors. The test manager may inform the destination device 508 as to how many active tone detectors the source device 502 has. The tone transmitter 530B then transmits the encoded timestamps to the source device 502.

The tone receiver 550A-of the source device 502 receives the encoded timestamps from the destination device 508 over the network 590. The tone detector 560A decodes the encoded timestamps to retrieve the destination device detection timestamp and the destination device generation timestamp. Then using the stored timestamps in the source device 502 along with the timestamps received from the destination device 508, the timer 510A of the source device 502 can calculate the delay 535A between it and the destination device 508.

Description of Processes

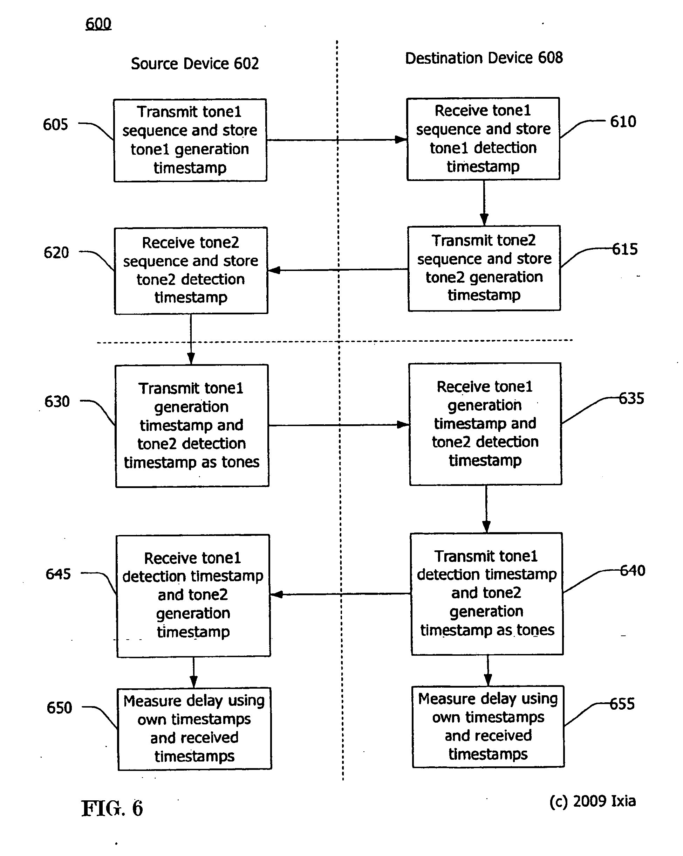

Referring now to FIG. 6, a process 600 for measuring the delay between a source device 602, such as source devices 302, 402 and 502 and a destination device 608, such as destination devices 308, 408, and 508, is shown.

The process 600 for measuring delay may begin for example in response to an operator request. The process 600 for measuring delay may occur in two phases as shown in FIGS. 4 and 5. The path confirmation phase, or first phase as shown in FIG. 4, can be seen by the actions performed above the horizontal dashed line - namely steps 605, 610, 615 and 620. The second phase, as shown in FIG. 5, can be seen by the actions performed below the horizontal dashed line, namely steps 630, 635, 640, 645, 650 and 655.

In the first phase, once the process for measuring delay has been initiated, the test manager for the source device 602 and the test manager for the destination device 608 may synchronize the internal system clocks for each device so as to ensure an accurate measurement of the delay. The delay may be measured for example to a granularity of I millisecond.

At 605, the source device 602 may generate and transmit a set of in-band tones to the destination device 608 to establish a connection between the two devices. The tones transmitted may include in-band SF tones, MF tones, DTMF tones, custom defined tones, or other in-band capable tones. The tones may be configurable by an operator so as to not interfere with any country defined tones or other regulatory signaling tones. Once the first of the set of tones is transmitted, the source device generates and stores the timestamp of when the first tone was transmitted to the destination device 608.

At 610, the set of in-band tones are received by the destination device 608. The in-band tones are decoded and analyzed to determine whether the set of tones correspond to the tones that the destination device 608 was expecting from the source device 602. The destination device 608 also generates a timestamp of when the first in-band tone was detected by the destination device 608. The destination device 608 then stores the detection timestamp so as to use it later to calculate the delay between the source device 602 and the destination device 608.

At 615, the destination device 608 may generate and transmit a set of in-band tones to the source device 602 to complete the path confirmation phase between the two devices. The tones transmitted may be the same in-band tones as those transmitted by the source device to the destination device 608. The tones transmitted may include in-band SF tones, MF tones, DTMF tones, custom defined tones, or other in-band capable tones. The in-band tones may be configurable by an operator so as to not interfere with any country defined tones or other regulatory signaling tones. Once the first of the set of in-band tones is transmitted, the destination device 608 generates and stores the timestamp of when the first in-band tone was transmitted to the source device 602.

At 620, the set of in-band tones are received by the source device 602. The in-band tones are decoded and analyzed to determine whether the set of tones correspond to the in-band tones that the source device 602 was expecting from the destination device 608. The source device 602 also generates a timestamp of when the first in-band tone was detected by the source device 602. The source device 602 then stores the detection timestamp so as to use it later to calculate the delay between the source device 602 and the destination device. Once 620 is completed, the path confirmation phase, or phase 1, of the process has been completed.

At 630, the source device 602 encodes the generation timestamp and the detection timestamp and transmits these timestamps as in-band tones to the destination device 608. The generation timestamp represents the time of when the first in-band tone was transmitted from the source device 602 to the destination device 608. The detection timestamp represents the time of when the first in-band tone was detected by the source device 602 from the destination device 608. The timestamps encoded represent the relative numbers of when the in-band tones were transmitted or detected. The timestamps may be encoded as in-band SF tones, MF tones, DTMF tones, custom defined tones, or other in-band capable tones. The in-band tones may be configurable by an operator so as to not interfere with any country defined tones or other regulatory signaling tones.

For example, assume that the time that the source device 602 sent the set of in-band tones to the destination device 608 is 12:10:30;345, wherein 12 represents the hour, 10 represents the minutes, 30 represents the seconds and 345 represents the milliseconds. The source device 602 would then store the time 0;345, wherein 0 represents the seconds and 345 represents the milliseconds. When storing the seconds value of the time, only the tens digit is stored. The tens digit of the seconds time that is stored is first calculated by performing the modulo four function on it (the modulo four function is performed on the tens digit to allow for a maximum one-way delay of 4000 ms). In this case, 0 mod 4 would equal 0. Therefore, 0 seconds is stored. The relative millisecond stored is the actual milliseconds. Thus, in this case, the milliseconds stored is 345. Therefore, the relative time stored for the generation timestamp would be 0;345.

The time is then encoded based on the number of active tone detectors that exist in the hardware device. The number of active tone detectors is dependent on the hardware and software being used but is configurable by an operator.

For example, assume that the destination device 608 has four active custom tone detectors. In this case, four digits can be used for encoding the timestamp, namely digits 0, 1, 2, 3 can be used for encoding. With four digits capable of encoding, 6 digits will need to be used to encode each relative timestamp. The first of the six digits would represent the relative seconds stored for the timestamp. The five remaining digits would represent the milliseconds of the timestamp. Five digits are required because to represent the range of milliseconds from 0-999 using four digits (0, 1, 2, and 3), five digits were required. Providing an encoding scheme for the entire range of milliseconds from 0-999 ensures that the delay is measured within a 1 ms granularity. Thus, when the source device 602 transmits the generation and detection timestamps to the destination device 608, twelve digits would be required to transmit both timestamps (six digits for each timestamp).

Alternatively, assume that the device has ten tone detectors capable of detecting DTMFs. In this example, since ten tone detectors exist, ten digits can be used for encoding. Therefore, to send the relative seconds and milliseconds timestamp, four digits would be required, where the first digit would represent the seconds and the remaining three digits would represent the milliseconds. Thus, when the source device 602 transmits the generation and detection timestamps to the destination device, eight digits would be required to transmit both timestamps (four digits for each timestamp).

The timestamps may be encoded as in-band SF tones, MF tones, DTMF tones, custom defined tones, or other in-band capable tones. The tones may be configurable by an operator so as to not interfere with any country defined tones or other regulatory signaling tones.

At 635, the destination device 608 receives the source device's 602 generation timestamp and detection timestamps. The destination device 608 can then use these timestamp in 655, to measure the delay between the source device 602 and the destination device 608.

At 640, the destination device 608 then encodes its detection and generation timestamps and transmits these timestamps to the source device 602. As in 630, the destination device's timestamps are encoded based on the number of tone detectors available on the device. As in the examples mentioned above, if the device has four tone detectors, then twelve digits would be required to encode the detection and generation timestamps for the destination device 608. If the device has ten tone detectors, then eight digits would be required to encode the detection and generation timestamps for the destination device 608. After the detection and generation timestamps have been encoded into in-band SF tones, MF tones, DTMF tones, custom defined tones, or other in-band capable tones, then these timestamps are transmitted to the source device 602.

At 645, the source device 602 receives the tones from the destination device 608, representing the detection and generation timestamp of the destination device 608. The source device 602 then decodes these timestamps to identify the relative time of the destination device 608. The source device 602 then uses these relative times to measure the delay between the destination device 608 and the source device 602.

At 650 and 655, the source device 602 and the destination device 608 can each measure its own delay. No external devices are required to calculate the delay. Using its own stored time and the time received from the other network device, the source device 602 and the destination device 608 can calculate the delay.

For example, assume that the relative time that the destination device 608 detected the first tone from the source device 602 was 1;567, meaning 1 second, 567 milliseconds. Next assume that the relative time that the source device 602 first transmitted a tone to the destination device 608 was 0;345, meaning 0 seconds, 345 milliseconds. Then, in order to calculate the delay from the source device 602 to the destination device 608, one would calculate: 1|567 ― 0|345. This would result in a delay of 1222 milliseconds. Thus, the source device 602 is then able to calculate in real-time the delay from the time that it transmitted a set of tones to the destination device 608 to the time that the destination device 608 received the set of tones. The destination device 608 is also able to calculate in real-time the delay from the time that it transmitted a set of tones to the source device 602 to the time that the source device 602 received the set of tones.

After 650 and 655, both the source device 602 and the destination device 608 have calculated in real-time the delay between each device.

Closing Comments

Throughout this description, the embodiments and examples shown should be considered as exemplars, rather than limitations on the apparatus and procedures disclosed or claimed. Although many of the examples presented herein involve specific combinations of method acts or system elements, it should be understood that the scope of the invention is defined by the appended claims.

Within this description, the term "unit" also means a collection of hardware, firmware, and/or software, which may be on a larger scale than an "engine". For example, a unit may contain multiple engines, some of which may perform similar functions in parallel. The terms "engine" and "unit" do not imply any physical separation or demarcation. All or portions of one or more units and/or engines may be collocated on a common card, such as a network card 114, or within a common FPGA, ASIC, or other circuit device.

As used herein, "plurality" means two or more. As used herein, a "set" of items may include one or more of such items. As used herein, whether in the written description or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. As used herein, "and/or" means that the listed items are alternatives, but the alternatives also include any combination of the listed items.

## Claims

1. A method for measuring one-way delay between a source device (402, 502) and a destination device (408, 508) on a network (190, 290A, 290B, 290C, 390, 490, 590) comprising:
synchronizing respective timers (310, 410A, 410B, 510A, 510B) within the source device and the destination device;
after synchronizing the timers, the source device transmitting (605) a first in-band tone sequence to the destination device and storing (605) a first generation timestamp indicating when the first in-band tone sequence was transmitted by the source device;
the destination device receiving (610) the first in-band tone sequence and storing (610) a first detection timestamp indicating when the first in-band tone sequence was detected by the destination device;
the source device transmitting (630) the first generation timestamp to the destination device;
the destination device receiving (635) the first generation timestamp and transmitting (640) the first detection timestamp to the source device; and
the source device receiving (645) the first detection timestamp and determining (650) the one-way delay from the source device to the destination device using the first generation timestamp and the first detection timestamp.

2. The method of claim 1 further comprising
the destination device determining (655) the one-way delay from the source device to the destination device using the first generation timestamp and the first detection timestamp.

3. The method of claim 2 further comprising
in response to receiving the first in-band tone sequence, the destination device transmitting (615) a second in-band tone sequence to the source device and storing (615) a second generation timestamp indicating when the second in-band tone sequence was transmitted by the destination device;
the source device receiving (620) the second in-band tone sequence and storing (620) a second detection timestamp indicating when the second in-band tone sequence was detected by the source device;
the destination device transmitting (640) the second generation timestamp to the source device; and
the source device receiving (645) the second generation timestamp and determining (650) the one-way delay from the destination device to the source device using the second generation timestamp and the second detection timestamp.

4. The method of claim 3 further comprising
the source device transmitting (630) the second detection timestamp to the destination device; and
the destination device receiving (635) the second detection timestamp and determining (655) the one-way delay from the destination device to the source device using the second generation timestamp and the second detection timestamp.

5. The method of any of claims 1-4, wherein each timestamp transmitted by the source device or the destination device is encoded as another in-band tone sequence.

6. The method of claim 4 wherein each timestamp is encoded as DTMF tones.

7. The method of claim 4 wherein each timestamp is encoded as custom defined tones.

8. A system for measuring one-way delay between a source device (402, 502) and a destination device (408, 508) on a network (190, 290A, 290B, 290C, 390, 490, 590) comprising:
the source device (402, 502) and the destination device (408, 508) comprising respective timers to be synchronized before the source device transmits a first in-band tone sequence;
the source device (402, 502) adapted to transmit the first in-band tone sequence to the destination device (408, 508) and to store a first generation timestamp indicating when the first in-band tone sequence was transmitted by the source device (402, 502);
the destination device (408, 508) adapted to receive the first in-band tone sequence and to store a first detection timestamp indicating when the first in-band tone sequence was detected by the destination device (408, 508);
the source device (402, 502) adapted to transmit the first generation timestamp to the destination device (408, 508);
the destination device (408, 508) adapted to receive the first generation timestamp and to transmit the first detection timestamp to the source device (402, 502); and
the source device (402, 502) adapted to receive the first detection timestamp and to determine the one-way delay from the source device (402, 502) to the destination device (408, 508) using the first generation timestamp and the first detection timestamp.

9. The system of claim 8 wherein the destination device (408, 508) is adapted to determine the one-way delay from the source device (402, 502) to the destination device using the first generation timestamp and the first detection timestamp.

10. The system of claim 9 wherein
the destination device (408, 508) is adapted to transmit a second in-band tone sequence to the source device (402, 502) in response to receiving the first in-band tone sequence and to store a second generation timestamp indicating when the second in-band tone sequence was transmitted by the destination device (408, 508);
the source device (402, 502) is adapted to receive the second in-band tone sequence and to store a second detection timestamp indicating when the second in-band tone sequence was detected by the source device (402, 502);
the destination device (408, 508) is adapted to transmit the second generation timestamp to the source device (402, 502); and
the source device (402, 502) is adapted to receive the second generation timestamp and to determine the one-way delay from the destination device (408, 508) to the source device (402, 502) using the second generation timestamp and the second detection timestamp.

11. The system of claim 10 wherein
the source device (402, 502) is adapted to transmit the second detection timestamp to the destination device (408, 508); and
the destination device (408, 508) is adapted to receive the second detection timestamp and to determine the one-way delay from the destination device (408, 508) to the source device (402, 502) using the second generation timestamp and the second detection timestamp.

12. The system of any of claims 8-11, wherein each timestamp transmitted by the source device or the destination device is encoded as another in-band tone sequence.

13. The system of anyone of claims 8 to 12 wherein the source device (402, 502) is a device on a circuit-switched network and the destination device (408, 508) is a device on a packet-switched network.

14. The system of anyone of claims 8 to 12 wherein the source device (402, 502) is a device on a packet-switched network and the destination device (408, 508) is a device on a circuit-switched network.

15. The system of anyone of claims 8 to 13, wherein the timestamp is encoded as DTMF tones.

16. The system of anyone of claims 8 to 13, wherein the timestamp is encoded as custom defined tones.

## Patentansprüche

1. Ein Verfahren zum Messen von Einwegeverzögerung zwischen einem Quellgerät (402, 502) und einen Zielgerät (408, 508) in einem Netzwerk (190, 290A, 290B, 290C, 390, 490, 590) umfassend:
Synchronisieren jeweiliger Timer (310, 410A, 410B 510A, 510B) im Quellgerät und im Zielgerät;
nach dem Synchronisieren der Timer überträgt (605) das Quellgerät eine erste In-Band-Tonfolge an das Zielgerät und speichert (605) einen ersten Erzeugungszeitstempel, der angibt, wann die erste In-Band-Tonfolge vom Quellgerät übertragen wurde;
das Zielgerät empfängt (610) die erste In-Band-Tonfolge und speichert (610) einen ersten Erkennungszeitstempel, der angibt, wann die erste In-Band-Tonfolge durch das Zielgerät erkannt wurde;
das Quellgerät überträgt (630) den ersten Erzeugungszeitstempel zum Zielgerät;
das Zielgerät empfängt (635) den ersten Erzeugungszeitstempel und überträgt (640) den ersten Erkennungszeitstempel an das Quellgerät; und
das Quellgerät empfängt (645) den ersten Erkennungszeitstempel und bestimmt (650) die Einwegeverzögerung vom Quellgerät zum Zielgerät mittels des ersten Erzeugungszeitstempels und des ersten Erkennungszeitstempels.

2. Das Verfahren nach Anspruch 1 weiterhin umfassend
das Zielgerät bestimmt (655) die Einwegeverzögerung vom Quellgerät zum Zielgerät mittels des ersten Erzeugungszeitstempels und des ersten Erkennungszeitstempels.

3. Das Verfahren nach Anspruch 2 weiterhin umfassend
auf das Empfangen der ersten In-Band-Tonfolge hin überträgt (615) das Zielgerät eine zweite In-Band-Tonfolge an das Quellgerät und speichert (615) einen zweiten Erzeugungszeitstempel, der angibt, wann die zweite In-Band-Tonfolge durch das Zielgerät übertragen wurde;
das Quellgerät empfängt (620) die zweite In-Band-Tonfolge und speichert (620) einen zweiten Erkennungszeitstempel, der angibt, wann die zweite In-Band-Tonfolge durch das Quellgerät erkannt wurde;
das Zielgerät überträgt (640) den zweiten Erzeugungszeitstempel an das Quellgerät; und
das Quellgerät empfängt (645) den zweiten Erzeugungszeitstempel und bestimmt (650) die Einwegeverzögerung vom Zielgerät zum Quellgerät mittels des zweiten Erzeugungszeitstempels und des zweiten Erkennungszeitstempels.

4. Das Verfahren nach Anspruch 3 weiterhin umfassend
das Quellgerät überträgt (630) den zweiten Erkennungszeitstempel an das Zielgerät; und
das Zielgerät empfängt (635) den zweiten Erkennungszeitstempel und bestimmt (655) die Einwegeverzögerung vom Zielgerät zum Quellgerät mittels des zweiten Erzeugungszeitstempels und des zweiten Erkennungszeitstempels.

5. Das Verfahren nach jedem der Ansprüche 1-4, wobei jeder vom Quellgerät oder vom Zielgerät übertragene Zeitstempel, als eine andere In-Band-Tonfolge kodiert wird.

6. Das Verfahren nach Anspruch 4, wobei jeder Zeitstempel als DTMF-Töne kodiert wird.

7. Das Verfahren nach Anspruch 4, wobei jeder Zeitstempel als benutzerdefinierte Töne kodiert wird.

8. Ein System zum Messen von Einwegeverzögerung zwischen einem Quellgerät (402, 502) und einen Zielgerät (408, 508) in einem Netzwerk (190, 290A, 290B, 290C, 390, 490, 590) umfassend:
das Quellgerät (402, 502) und das Zielgerät (408, 508) umfassen jeweilige Timer, die zu synchronisieren sind, bevor das Quellgerät eine erste In-Band-Tonfolge überträgt;
das Quellgerät (402, 502) ist eingerichtet, die erste In-Band-Tonfolge an das Zielgerät (408, 508) zu übertragen und einen ersten Erzeugungszeitstempel zu speichern, der angibt, wann die erste In-Band-Tonfolge vom Quellgerät (402, 502) übertragen wurde;
das Zielgerät (408, 508) ist eingerichtet, die erste In-Band-Tonfolge zu empfangen und einen ersten Erkennungszeitstempel zu speichern, der angibt, wann die erste In-Band-Tonfolge durch das Zielgerät (408, 508) erkannt wurde;
das Quellgerät (402, 502) ist eingerichtet, den ersten Erzeugungszeitstempel an das Zielgerät (408, 508) zu übertragen;
das Zielgerät (408, 508) ist eingerichtet, den ersten Erzeugungszeitstempel zu empfangen und den ersten Erkennungszeitstempel an das Quellgerät (402, 502) zu übertragen; und
das Quellgerät (402, 502) ist eingerichtet, den ersten Erkennungszeitstempel zu empfangen und die Einwegeverzögerung vom Quellgerät (402, 502) zum Zielgerät (408, 508) mittels des ersten Erzeugungszeitstempels und des ersten Erkennungszeitstempels zu bestimmen.

9. Das System nach Anspruch 8, wobei das Zielgerät (408, 508) eingerichtet ist, die Einwegeverzögerung vom Quellgerät (402, 502) zum Zielgerät (408, 508) mittels des ersten Erzeugungszeitstempels und des ersten Erkennungszeitstempels zu bestimmen.

10. Das System nach Anspruch 9, wobei
das Zielgerät (408, 508) eingerichtet ist, auf das Empfangen der ersten In-Band-Tonfolge hin eine zweite In-Band-Tonfolge an das Quellgerät (402, 502) zu übertragen und einen zweiten Erzeugungszeitstempel zu speichern, der angibt, wann die zweite In-Band-Tonfolge durch das Zielgerät (408, 508) übertragen wurde;
das Quellgerät (402, 502) ist eingerichtet, die zweite In-Band-Tonfolge zu empfangen und einen zweiten Erkennungszeitstempel speichern, der angibt, wann die zweite In-Band-Tonfolge durch das Quellgerät (402, 502) erkannt wurde;
das Zielgerät (408, 508) ist eingerichtet, den zweiten Erzeugungszeitstempel an das Quellgerät (402, 502) zu übertragen; und
das Quellgerät (402, 502) ist eingerichtet, den zweiten Erzeugungszeitstempel zu empfangen und die Einwegeverzögerung vom Zielgerät (408, 508) zum Quellgerät (402, 503) mittels des zweiten Erzeugungszeitstempels und des zweiten Erkennungszeitstempels zu bestimmen.

11. Das System nach Anspruch 10, wobei
das Quellgerät (402, 502) eingerichtet ist, den zweiten Erkennungszeitstempel an das Zielgerät (408, 508) zu übertragen; und
das Zielgerät (408, 508) eingerichtet ist, den zweiten Erkennungszeitstempel zu empfangen und die Einwegeverzögerung vom Zielgerät (408, 508) zum Quellgerät (402, 503) mittels des zweiten Erzeugungszeitstempels und des zweiten Erkennungszeitstempels zu bestimmen.

12. Das System nach jedem der Ansprüche 8-11, wobei jeder vom Quellgerät oder vom Zielgerät übertragene Zeitstempel als eine andere In-Band-Tonfolge kodiert wird.

13. Das System nach jedem der Ansprüche 8 bis 12, wobei das Quellgerät (402, 502) ein Gerät in einem leitungsvermittelten Netzwerk ist und das Zielgerät (408, 508) ein Gerät in einem paketvermittelten Netzwerk ist.

14. Das System nach jedem der Ansprüche 8 bis 12, wobei das Quellgerät (402, 502) ein Gerät in einem paketvermittelten Netzwerk ist und das Zielgerät (408, 508) ein Gerät in einem leitungsvermittelten Netzwerk ist.

15. Das System nach jedem der Ansprüche 8 bis 13, wobei jeder Zeitstempel als DTMF-Töne kodiert ist.

16. Das System nach jedem der Ansprüche 8 bis 13, wobei jeder Zeitstempel als benutzerdefinierte Töne kodiert ist.

## Revendications

1. Procédé de mesure d'un retard unidirectionnel entre un dispositif source (402, 502) et un dispositif destination (408, 508) sur un réseau (190, 290A, 290B, 290C, 390, 490, 590) comprenant :
la synchronisation de compteurs respectifs (310, 410A, 410B, 510A, 510B) dans le dispositif source et le dispositif destination ;
après la synchronisation des compteurs, le dispositif source transmettant (605) une première séquence de tonalité intra-bande au dispositif destination et stockant (605) une première estampille temporelle de génération indiquant le moment où la première séquence de tonalité intra-bande a été transmise par le dispositif source ;
le dispositif destination recevant (610) la première séquence de tonalité intra-bande et stockant (610) une première estampille temporelle de détection indiquant le moment où la première séquence de tonalité intra-bande a été détectée par le dispositif destination ;
le dispositif source transmettant (630) la première estampille temporelle de génération au dispositif destination ;
le dispositif destination recevant (635) la première estampille temporelle de génération et transmettant (640) la première estampille temporelle de détection au dispositif source ; et
le dispositif source recevant (645) la première estampille temporelle de détection et déterminant (650) le retard unidirectionnel depuis le dispositif source vers le dispositif destination à l'aide de la première estampille temporelle de génération et de la première estampille temporelle de détection.

2. Procédé selon la revendication 1, comprenant en outre
le dispositif destination déterminant (655) le retard unidirectionnel depuis le dispositif source vers le dispositif destination à l'aide de la première estampille temporelle de génération et de la première estampille temporelle de détection.

3. Procédé selon la revendication 2, comprenant en outre
en réponse à la réception de la première séquence de tonalité intra-bande, le dispositif destination transmettant (615) une seconde séquence de tonalité intra-bande au dispositif source et stockant (615) une seconde estampille temporelle de génération indiquant le moment où la seconde séquence de tonalité intra-bande a été transmise par le dispositif destination ;
le dispositif source recevant (620) la seconde séquence de tonalité intra-bande et stockant (620) une seconde estampille temporelle de détection indiquant le moment où la seconde séquence de tonalité intra-bande a été détectée par le dispositif source ;
le dispositif destination transmettant (640) la seconde estampille temporelle de génération au dispositif source ; et
le dispositif source recevant (645) la seconde estampille temporelle de génération et déterminant (650) le retard unidirectionnel depuis le dispositif destination vers le dispositif source à l'aide de la seconde estampille temporelle de génération et de la seconde estampille temporelle de détection.

4. Procédé selon la revendication 3 comprenant en outre
le dispositif source transmettant (630) la seconde estampille temporelle de détection au dispositif destination ; et
le dispositif destination recevant (635) la seconde estampille temporelle de détection et déterminant (655) le retard unidirectionnel depuis le dispositif destination vers le dispositif source à l'aide de la seconde estampille temporelle de génération et de la seconde estampille temporelle de détection.

5. Procédé selon l'une quelconque des revendications 1 à 4, dans lequel chaque estampille temporelle transmise par le dispositif source ou le dispositif destination est codée en tant qu'autre séquence de tonalité intra-bande.

6. Procédé selon la revendication 4 dans lequel chaque estampille temporelle est codée en tant que tonalités DTMF.

7. Procédé selon la revendication 4 dans lequel chaque estampille temporelle est codée en tant que tonalités définies par l'usage.

8. Système de mesure d'un retard unidirectionnel entre un dispositif source (402, 502) et un dispositif destination (408, 508) sur un réseau (190, 290A, 290B, 290C, 390, 490, 590) comprenant :
le dispositif source (402, 502) et le dispositif destination (408, 508) comprenant des compteurs respectifs à synchroniser avant que le dispositif source ne transmette une première séquence de tonalité intra-bande ;
le dispositif source (402, 502) conçu pour transmettre une première séquence de tonalité intra-bande au dispositif destination (408, 508) et pour stocker une première estampille temporelle de génération indiquant le moment où la première séquence de tonalité intra-bande a été transmise par le dispositif source (402, 502) ;
le dispositif destination (408, 508) conçu pour recevoir la première séquence de tonalité intra-bande et pour stocker une première estampille temporelle de détection indiquant le moment où la première séquence de tonalité intra-bande a été détectée par le dispositif destination (408, 508) ;
le dispositif source (402, 502) conçu pour transmettre la première estampille temporelle de génération au dispositif destination (408, 508) ;
le dispositif destination (408, 508) conçu pour recevoir la première estampille temporelle de génération et pour transmettre la première estampille temporelle de détection au dispositif source (402, 502) ; et
le dispositif source (402, 502) conçu pour recevoir la première estampille temporelle de détection et pour déterminer le retard unidirectionnel depuis le dispositif source (402, 502) vers le dispositif destination (408, 508) à l'aide de la première estampille temporelle de génération et de la première estampille temporelle de détection.

9. Système selon la revendication 8, dans lequel le dispositif destination (408, 508) est conçu pour déterminer le retard unidirectionnel depuis le dispositif source (402, 502) vers le dispositif destination à l'aide de la première estampille temporelle de génération et de la première estampille temporelle de détection.

10. Système selon la revendication 9, dans lequel le dispositif destination (408, 508) est conçu pour transmettre une seconde séquence de tonalité intra-bande au dispositif source (402, 502) en réponse à la réception de la première séquence de tonalité intra-bande et pour stocker une seconde estampille temporelle de génération indiquant le moment où la seconde séquence de tonalité intra-bande a été transmise par le dispositif destination (408, 508) ;
le dispositif source (402, 502) est conçu pour recevoir la seconde séquence de tonalité intra-bande et pour stocker une seconde estampille temporelle de détection indiquant le moment où la seconde séquence de tonalité intra-bande a été détectée par le dispositif source (402, 502) ;
le dispositif destination (408, 508) est conçu pour transmettre la seconde estampille temporelle de génération au dispositif source (402, 502) ; et
le dispositif source (402, 502) est conçu pour recevoir la seconde estampille temporelle de génération et pour déterminer le retard unidirectionnel depuis le dispositif destination (408, 508) vers le dispositif source (402, 502) à l'aide de la seconde estampille temporelle de génération et de la seconde estampille temporelle de détection.

11. Système selon la revendication 10 dans lequel le dispositif source (402, 502) est conçu pour transmettre la seconde estampille temporelle de détection au dispositif destination (408, 508) ; et
le dispositif destination (408, 508) est conçu pour recevoir la seconde estampille temporelle de détection et pour déterminer le retard unidirectionnel depuis le dispositif destination (408, 508) vers le dispositif source (402, 502) à l'aide de la seconde estampille temporelle de génération et de la seconde estampille temporelle de détection.

12. Système selon l'une quelconque des revendications 8 à 11, dans lequel chaque estampille temporelle transmise par le dispositif source ou le dispositif destination est codée en tant qu'autre séquence de tonalité intra-bande.

13. Système selon l'une quelconque des revendications 8 à 12 dans lequel le dispositif source (402, 502) est un dispositif sur un réseau à commutation par circuit et le dispositif destination (408, 508) est un dispositif sur un réseau à commutation par paquet.

14. Système selon l'une quelconque des revendications 8 à 12 dans lequel le dispositif source (402, 502) est un dispositif sur un réseau à commutation par paquet et le dispositif destination (408, 508) est un dispositif sur un réseau à commutation par circuit.

15. Système selon l'une quelconque des revendications 8 à 13, dans lequel l'estampille temporelle est codée en tant que tonalité DTMF.

16. Système selon l'une quelconque des revendications 8 à 13, dans lequel l'estampille temporelle est codée en tant que tonalité définie par l'usage.
